# EUROPÄISCHE PATENTSCHRIFT

(11) **EP 3 956 582 B1**
(45) Veröffentlichungstag und Bekanntmachung des Hinweises auf die Patenterteilung: **05.03.2025**
(21) Anmeldenummer: 20717160.4
(22) Anmeldetag: 03.04.2020
(51) Int. Cl.: F16D 55/22, F16D 65/097, F16D 65/54, F16D 65/00

(54) **KRAFTFAHRZEUGSCHEIBENBREMSBELAG MIT REIBBELAGRÜCKSTELLFEDER**
MOTOR VEHICLE DISC BRAKE LINING WITH FRICTION LINING RETURN SPRING
GARNITURE DE FREIN À DISQUE DE VÉHICULE AUTOMOBILE AVEC RESSORT DE RAPPEL DE LA GARNITURE DE FRICTION

(30) Priorität: 17.04.2019 DE 102019205625; 28.08.2019 DE 102019212896
(43) Veröffentlichungstag der Anmeldung: 23.02.2022
(73) Patentinhaber: Continental Automotive Technologies GmbH, 30175 Hannover (DE)
(72) Erfinder: PETRI, Ralph, 60488 Frankfurt am Main (DE); BASHAYAN, Kilian, 60488 Frankfurt am Main (DE); SALZMANN, Sebastian, 60488 Frankfurt am Main (DE)
(74) Vertreter: Continental Corporation
(86) Internationale Anmeldenummer: PCT/EP2020/059518
(87) Internationale Veröffentlichungsnummer: WO 2020/212169

(56) Entgegenhaltungen:
- DE-A1- 102016 202 520
- DE-T5- 112013 004 669
- US-A1- 2004 222 053

## Beschreibung

Die Erfindung betrifft eine Scheibenbremsbelagbaugruppe 1 umfassend Reibwerkstoff 2 der frontseitig auf einer Rückenplatte 3 fixiert ist, sowie mit einer an der Rückenplatte 3 rückseitig fixiert angeordneten Reibbelagrückstellfeder 4, wobei die Reibbelagrückstellfeder 4 über einen Sockel 5 und einen anschließenden elastischen Rückstellfederbügel 6 verfügt, und wobei der Rückstellfederbügel 6 dazu geeignet und bestimmt ist, auf einem zugeordneten Widerlager 7 eines Stators/Halterung 8 aufzusitzen. Bei dem Stator/Halterung 8 kann es sich um einen drehfest also statisch, fahrzeugfest, montierten Bremshalter handeln, welcher dazu geeignet und bestimmt ist, zwei drehfest sowie parallel zueinander axialverschiebbar (Achse Ax) im Halter 8 gelagerte (und meist weitgehend spiegelbildlich auszubildende) Reibbeläge 1 aufzunehmen, und gleichzeitig ein Faustsattelbremsgehäuse 19, das zusätzlich oder gesondert neben hydraulischen Zuspannmitteln eine Elektromotor-Getriebe-Einheit 20 aufweisen darf, zu tragen. **In** diesem Systemverbund dient eine reibbelagfest allokierte Reibbelagrückstellfeder 4 dazu, mit Ihrem elastisch vorgespannt auf dem Widerlager 7 in Axialrichtung vorgespannt gerichtet aufsitzenden Rückstellfederbügel 6 dafür zu sorgen, dass der betreffende (zumeist der indirekt betätigte) Kraftfahrzeugscheibenbremsbelag 1 infolge der aufgeprägten Rückstellfederkraft automatisch in die umgekehrte Bremsbetätigungsrichtung, also aus einer Bremsbetätigungsstellung, axial gerichtet zurückfedert.

Eine bekannte Kraftfahrzeugscheibenbremse, wie insbesondere ein bekannter Kraftfahrzeugscheibenbremsbelag mit integrierter Blechrückstellbefederung geht beispielhaft aus der JP 2012 - 63014 A hervor. Die Rückstellfedern der Reibbeläge verfügen über einen Sockel, welcher auf einer Rückseite einer Rückenplatte des Scheibenbremsbelags unlösbar aufsitzt. An diesen Sockel schließt sich ein etwa Δ(delta)-förmig abgewinkelter Rückstellfederbügel an, der parallel zur Tangentialrichtung lateral abgewinkelt ist, sowie elastisch deformierbar auf einer Stirnseite eines Bremshalters aufsitzt. In eine Halterung ist auch eine Gleitblechanordnung gesondert eingefügt, so dass der Kraftfahrzeugscheibenbremsbelag über das Gleitblech in dem Halterung aufgenommen ist. Der Halterung trägt auch einen relativverschiebbar gelagerten Bremssattel. In diesem Scheibenbremssystem dient die elastische Blechrückstellfeder zu dem Zweck, dass der Kraftfahrzeugscheibenbremsbelag nach jeder Bremsbetätigung, also im gelösten Bremszustand, stets in eine fix definierte Ruhelage zurückgezogen wird, welche axial distanziert von einer Bremsscheibe versetzt vorliegt. Im Ergebnis werden dadurch Restbremsmomente sicher vermieden.

Aus der Fig. 2 der DE 30 23 103 A1 geht eine Teilbelagscheibenbremse hervor, deren indirekt betätigter Kraftfahrzeugscheibenbremsbelag mit lateral seitlich in Tangentialrichtung abgewinkeltem Rückstellfederbügel ausgestattet ist, welcher am Halterung anliegt, und wobei die Rückstellfeder am Reibbelag fixiert ist. Weiterhin ist die Rückstellfeder als eine verdrehbare Torsionsspiralfeder aus Draht ausgebildet ist, deren Ende mit einer Stauchung in einer Öffnung von der Rückenplatte gehalten ist. Mit der hydraulischen Kolbenverschiebung wird Torsionskraft in die Spiralfeder eingespeichert. Die Torsionsspiralfeder kann auch plastisch verformt werden, wenn die elastische Deformation einen vorbestimmten Betrag überschreitet, zwecks Aufrechterhaltung der elastischen Kraft der Reibbelagrückstellfeder auf einem niedrigen Niveau. Diesbezüglich ist jedoch keine Blechrückstellfedervariante offenbart.

Ein völlig anderer Mechanismus in der Verbindung mit einem halterfesten Gleitblech ergeht aus der US 9,528,564 B2. Dies beinhaltet einen Δ(Delta)-förmig abgewinkelten Rückstellfederbügel der als ein integraler, einstückiger Bestandteil der einstückig gesonderten Gleitblechbefederung ausgebildet ist, und wobei diese Gleitblechbefederung unverschieblich in dem Halterung gelagert aufgenommen ist.

Die US 10,030,729 B2 betrifft eine Kraftfahrzeugscheibenbremse die mit Gleitblechsegmenten im Halterung ausgestattet ist, und als Replacementkit für eine individuell bedarfsgerechte, flexibel nachrüstbare Befederung ausgelegt ist. Dazu darf ein indirekt betätigbarer Reibbelag eine plastisch deformierbare, und individuell nachrüstbare Rückstellfeder aus Blech aufweisen, deren Federbügel im Wesentlichen in der Tangentialrichtung Δ(Delta)-förmig gefaltet, also seitlich gerichtet, vorliegt sowie die Rückenplatte seitlich umgreift, um mit einer Lasche an der Frontseite der Reibbelagrückenplatte anzugreifen. Diese Blechrückstellfeder ist plastisch deformierbar gestaltet, indem diese über drei Biegeachsen P1,P2,P3 verfügt, die parallel zueinander gerichtet sind. Zwecks individueller Befederung in einer Radialrichtung ist zusätzlich eine gesondert aufclipsbare Blechbügelfeder definiert, deren Federbügel in der Radialrichtung erstreckt ist.

Aus der DE 10 2016 211 147 A1 erhellt die tangential seitlich des Reibbelags erstreckte Rückstellbefederung mitumfassend eine automatisch belagverschleißkompensierende Rückstellfeder unter Einbezug eines Rast-Verzahnungsprofils zwecks Reibbelagverschleißnachstellung.

Die DE 10 2012 006 082 A1 betrifft eine Schwimmsattelscheibenbremse mit Eignung für schwere Druckluft-Nutzfahrzeugbremsen umfassend eine lateral in die Tangentialrichtung ausgerichtete Rückstelleinrichtung einschließlich entsprechend adaptierten Reibbelag mit Rückenplatte und empfiehlt bei erhöhter Robustheit die tangential gerichtete Krallfeder die über eine scharfe, gehärtete Krallkante zur Kooperation mit einem Halterung verfügt, und wobei die Krallfeder eine ganz besonders steife Charakteristik ausbilden soll.

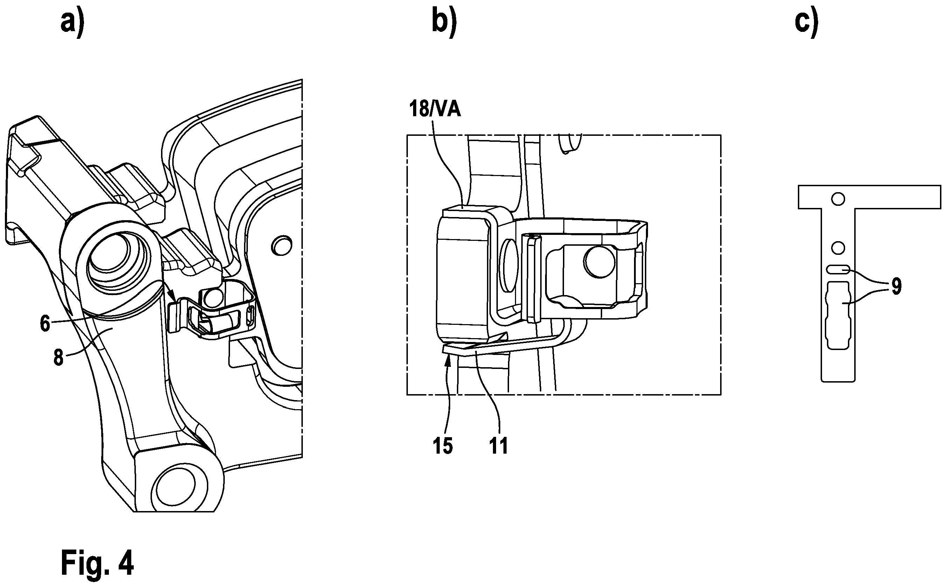

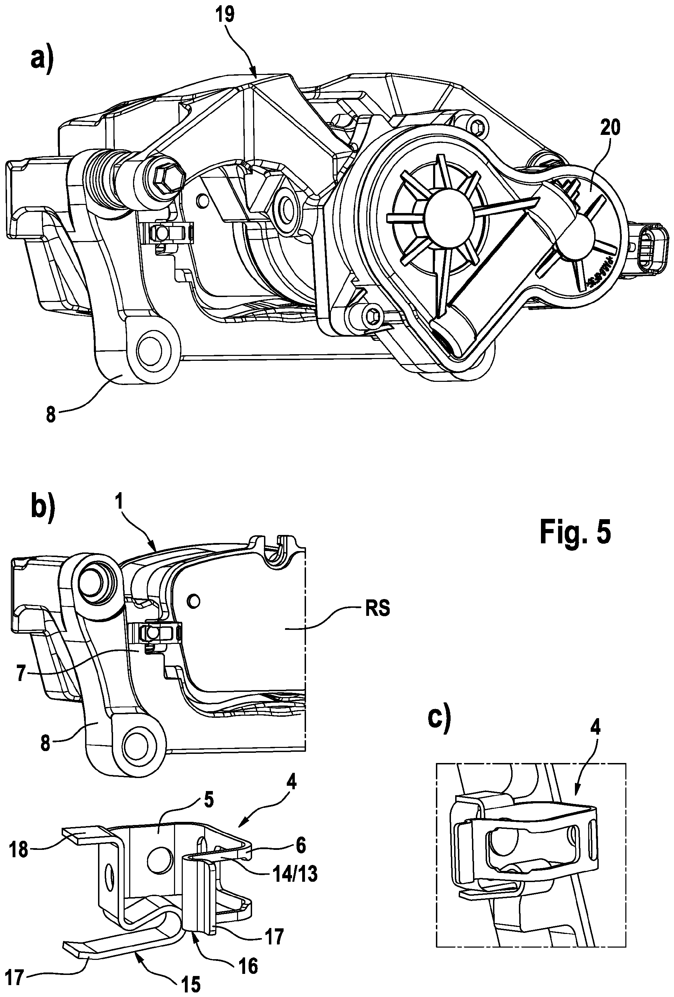

Die DE 11 2013 004 669 T5 betrifft eine Kraftfahrzeugscheibenbremse mit Scheibenbremsbelägen die beide eine einstückig-komplex in sämtliche Raumrichtungen gebogene Federanordnung umfassen. Dabei sind drei in unterschiedliche Raumrichtungen wirksame Federbügel vorgesehen. Ein radial nach auswärts gerichtet abgewinkelter Rückstellfederbügel kooperiert mit einem radial oberhalb des Sockels allokierten Widerlager an eine Bremshalter und beaufschlagt somit den Kraftfahrzeugscheibenbremsbelag gerichtet in der Axialrichtung. Desweiteren ermöglicht dieser Rückstellfederbügel auch noch eine Reibbelaganstellung umfassend ein Verschwenkmoment M in der Relation zur Anlagefläche. Demzufolge wird einer Kipptendenz entgegengewirkt. Aus der ersten Ausführungsform nach Fig. 4 + 5 ist jeweils der nach radial auswärts abgewinkelt abgebogene Axialfederschenkel sowie die beiden vorwiegend axial gerichtet erstreckten Radialfederschenkel und Tangentialfederschenkel ersichtlich. Dabei ist die Befederung aus einer einstückig ausgetrennten sowie umgeformten Metallplatte ausgebildet, die an Ohrabschnitten einer Rückenplatte fixiert ist.

US 2004/0222053 A1 bezieht sich auf eine wäscheklammerartig angeklipste Rückstellfeder für eine Reibbelaganordnung einer Kraftfahrzeugscheibenbremse, wobei laut Anspruch 1 jeweils zwei konkurrierende Rückstellfederbügel an der Rückstellfeder derart definiert sind, dass zueinander unterschiedliche Rückstellfederkraft erhalten wird.

Die DE 102016 202 520 A1 bezieht sich mit verschiedenen konstruktiv formulierten Ausführungen auf vereinfacht-praxisgerecht sowie besonders robust weiterentwickelte Reibbelaganordnungen inclusive Rückstellbefederung ohne dass dieser Schrift irgendeine Einzelheiten über eine Konzeptionierung einer Rückstellfederkennlinie zu entnehmen wäre.

Die vorliegende Erfindung beruht auf der Aufgabe, Nachteile laut Stand der Technik zu vermeiden, und bei geringem Aufwand (geringer Werkstoffbedarf, einfache Herstellung + einfacher, selbsterklärender Reibbelagaustausch) einen effizient weiterentwickelt befederten Kraftfahrzeugscheibenbremsbelag vorzulegen, der auch eine besonders verdichtete Bauweise erlaubt. Es besteht weiterhin das Rationalisierungsbestreben, dass eine Federkonfiguration im Wesentlichen ohne Auslegungsänderung sowohl für die gewöhnlichen Bremssättel, als auch für die kombiniert betätigbare Bremssättel (die einen Elektromotor integrieren) anbietet. Begleitend soll eine Variation ermöglicht sein, die für sämtliche Applikationen einen zuverlässig rationell verbessert vormontierbaren, sowie in seiner Baugruppenaufsplittung eindeutig sowie verdichtet strukturierten Kraftfahrzeugscheibenbremsenaufbau ermöglicht.

Die Aufgabe wird mit den Merkmalen des bzw. der unabhängigen Patentansprüche besonders rationell und gleichzeitig kompakt anhand Merkmalskombination mithin dadurch gelöst, dass die Reibbelagrückstellfeder 4 mit ihrem Sockel 5 reibbelagfest gelagert ist, und die Federeigenschaft mittels einer additiv zusammengesetzten Federkennlinie erzielt wird, die mehrere Abschnitte (A,B,C,D) additiv miteinander kombiniert, die mehrere quasilinear wachsende Gradenabschnitte A,C,D, und dazwischen eingefügt mindestens einen degressiv gekrümmten Übergangsabschnitt B umfasst, und wobei die Abschnitte A-D jeweils zueinander unterschiedlich definierte Steigungswinkel α,β,γ,δ, aufweisen, und der Rückstellfederbügel der Reibbelagrückstellfeder mit Bezug auf eine Radialrichtung bei tangential erstreckter Biegeachse nach radial innen weisend derart bügelförmig umgebogen ist, so dass das Widerlager des Rückstellfederbügels radial unterhalb in Bezug auf den Sockel zugeordnet ist. Unter den Abschnitten A-D befindet sich dabei zumindest ein teilweise plastisch deformierbar ausgelegter Teil bzw. Kennlinienabschnitt B,C,D, welcher durch sein vorgegebenes, definiertes, plastisches Verformungsverhalten dazu dient, die automatisch bedarfsgerecht definierte Rückfederung einschließlich Verschleißkompensation (Reibbelag + Bremsscheibe) zu ermöglichen. Der besonderer Vorteil der Erfindung besteht darin, dass Scheibenbremsbelag 1 und Reibbelagrückstellfeder 4 stets gemeinsam also besonders effizient ausgetauscht werden können, mit der positiven Auswirkung, dass die ordnungsgemäße Montage der Rückstellfedermittel weder unterlassen werden kann, noch eine unzulässige Weiterverwendung von verschlissenen Rückstellfedern möglich ist, und wobei die erfindungsgemäß vormontierten Rückstellfedermittel stets einfach sowie ordnungsgemäß recyclierbar im metallischen Wertstoffkreislauf der Scheibenbremsbeläge verbleiben. Die Erfindung ist zwar vorzugsweise primär hiermit in Zusammenhang mit einem Anwendungsbeispiel anhand einer gänzlich unlösbar gestalteten Niet-Fixierung zwischen Rückenplatte und Rückstellfederbaugruppe dargelegt, aber auf Grundlage einer ausreichend abgesicherten Fixierung ist prinzipiell auch eine lösbar arrangierte Federvariante denkbar, ohne die Grundsätze der vorliegenden Erfindung zu verlassen.

Sämtliche dieser Alternativen bzw. Bauformen sind grundsätzlich zur raumsparenden Integration variabel sowohl für die elektromechanisch per MGU 20 oder auch für die hydraulisch und elektromechanisch kombiniert betätigbaren Kombibremsen wie insbesondere auch für ausschließlich hydraulisch betätigbare Kraftfahrzeugscheibenbremsen einsetzbar.

In weiterer Ausgestaltung der Erfindung ergibt sich eine besonders dauerfeste, biegewechselfeste Rückstellfederbügelkonstruktion 6, wenn diese kaltverfestigt geschweift ausgeführt ist.

Versuche haben gezeigt, dass vorbekannte, konventionell abgewinkelte, Rückstellfederbügel infolge Federresonanz zu Geräuschdefizit führen können. Die vorliegende Erfindung reduziert derartige Risiken. Eine Kaltverfestigung ist partiell bezogen auf die Reibbelagrückstellfeder möglich. Diese kann eine einfache oder mehrfach wiederholte S-förmige und/oder schneckenförmig gewundene Federbügelkrümmung umfassen.

Für eine korrosionsresistente Gestaltung bietet es sich an, wenn die Reibbelagrückstellfeder 4 aus Edelstahl-Flachwerkstoff (Edelstahlblech) ausgetrennt ist, und wobei zumindest einige Baugruppenteile zwecks Federkennlinienmodifikation abschnittsweise oder vollständig als geschlossener Rahmen mit wenigstens einer Durchgangsöffnung 9 und/oder mit wenigstens einer randoffenen Profilierung 10 versehen sein können.

Eine multifunktional konfigurierte Rückstellfederbaugruppe ermöglicht eine rationelle Logistik bei vereinfachter Handhabung und effektiv verdichteter Werkstoffausnutzung, indem der Sockel 5 an der Reibbelagrückstellfeder weitgehend zentral vernietet definiert ist, und wobei davon einerseits ausgehend das radial gerichtete Endstück der Reibbelagrückstellfeder mit Rückstellfederbügel ausgeht, und wobei diametral gegenüberliegend ein diametral gegenüberliegendes Endstück der Federbaugruppe für eine einstückig integrierte Radialfederkomponente 11 und/oder eine einstückig integrierte Tangentialfederkomponente 13 einschließlich eines und/oder mehrerer zusätzlicher Federbügel 12 definiert ist. Mit anderen Worten ist das Streifenbild eines ausgetrennten Rohlteils der Einfachheit halber plan sowie plan und zungenförmig mit organisch anhängendem zusätzlichen Federbügel 12

Im Ergebnis wird durch das erfindungsgemäße Arrangement erstmals eine Scheibenbremse ermöglicht, bei der im Kraftfluss zwischen Kraftfahrzeugscheibenbremsbelag 1 und Halter 8 über die Federbaugruppe eine Radialfederkomponente 11 und/oder Tangentialfederkomponente 13 integriert ist.

Je nachdem ob eine weitgehende statische oder relativverschiebbar gepaarte Beziehung zwischen Federkomponente und Halterung 8 vorliegt, kann eine unterschiedlich variiert verbesserte Auflage für den gegenseitigen Kontakt dargestellt sein. Beispielsweise kann die gegenseitige Auflage eine quer gerichtete - wie insbesondere eine relativverschiebbare Kupplung zwischen Federbaugruppe und Halter 8 umfassen. Mit anderen Worten kann in der Auflage am Widerlager 7 ein dynamisch verlagerbarer Federsitz definiert sein. Eine verbesserte statische Auflage am Widerlager 7 ist genauso ermöglicht, wenn die Federbaugruppe wenigstens eine Gleitkufe 15 und/oder wenigstens eine Pendelkufe 16 ausbildet. Dabei ist die genannte Gleitkufe 15 insbesondere vorteilhaft durch reproduzierbare Relativverschiebungsfähigkeiten (Gleitreibungsverbesserung) gekennzeichnet, wohingegen eine Pendel- oder Wälzkufe 16 durch Selbstreinigungseigenschaften ganz besondere korrosionsunempfindliche Vorteile verspricht.

Insbesondere zwecks Verbesserung von Montagesicherheit im Rahmen von Erstmontage, oder auch für sicher ausführbare Wartungsvorgänge empfiehlt es sich zwecks Reproduktion, wenn jede Kufe 15,16 an Ihrem Endstück über eine abgewinkelte Schaufel oder über einen gebogenen Löffel 17 und/oder über eine Kombination derselben verfügt. Es versteht sich, dass etwaige Stanzgrate im Bereich der Reibbelagrückstellfeder 4 fachgerecht zu vermeiden sind bzw. durch Trovalisieren bzw. Elektropolieren o.ä. vom Fertigteil zu entfernen, um dadurch jegliche Verletzungsgefahr durch vorstehende Grate auszuschließen.

Eine Bauraumverdichtung und oder Rohwerkstoffausnutzung wird rationell erhöht, indem eine zusätzliche Federkomponente an der Rückstellfederbaugruppe einstückig kombiniert vorliegt, indem die Federkomponente als gesonderter Federbügel von der Federbaugruppe abzweigt. Dies wird beispielhaft ermöglicht, wenn Federkomponente und Rückstellfederbügel im Rohteilstreifenbild orthogonal zueinander versetzt abgebogen vorgesehen sind. Weiterhin ermöglicht es die Erfindung, dass die zusätzliche Federkomponente vom Sockel 5 und/oder vom Rückstellfederbügel 6 der Federbaugruppe abgezweigt ist.

Eine besonders effiziente Ausgestaltung der Federbaugruppe ist definiert indem diese in projiziertem Schattenwurf über eine im Wesentlichen G-förmig schneckenartig gekrümmt gebogen ausgeführte Sillhouette verfügt, sowie umfassend zwei Federkomponenten 11,13 einschließlich Kufen 15,16 mit orthogonal zueinander gerichteter Kraftwirkung, einerseits in die Radialrichtung R und andererseits in die Axialrichtung Ax.

Die vorliegende Erfindung wird ergänzend nachstehend anhand der Zeichnung, in der einige bevorzugte konstruktive Ausgestaltungen in Gänze oder in Teilen mithin skizzenhaft verdeutlicht dargestellt sind, näher erläutert. In diesem Zusammenhang ist insbesondere eine ggf. irgendwo lückenhaft aufscheinende, weil aus einem Gesamtzusammenhang herausgelöste, Einzel-, Teil- oder Komponentenoffenbarung gesamthaft derart zu verstehen, dass die gesamthaft betrachtete Offenbarung unter fachmännischer Sichtweise einen Sinn erbringt, selbst wenn diese auslegungsbedrftig oder lückenbehaftet aufscheinende Offenbarung sinnvollerweise einen Rückgriff auf andere oder benachbart ausdrücklich geschilderte Merkmale erfordert, welche bei Notwendigkeit auf eine Konzentration auf das Wesentliche ursprünglich an der jeweiligen Offenbarungsstelle nicht ausdrücklich detailoffenbart worden sind.

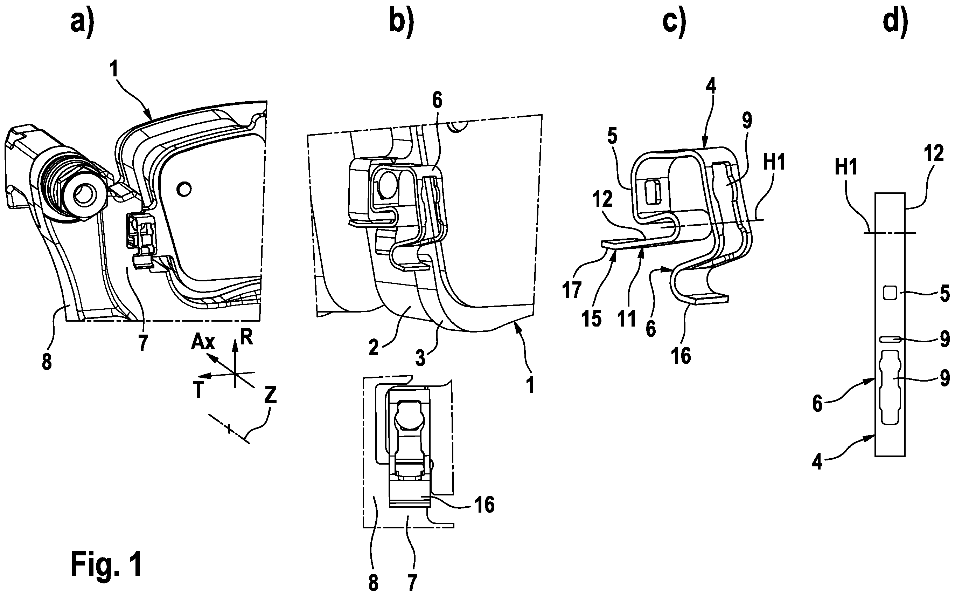

Fig. 1a-d eine erste, im Streifenbild i-förmig, gerade, gestreckt gestaltete Ausführungsform einer vernieteten Rückstellfederbaugruppe mit radial einwärts abgebogenem Axialfederschenkel incl. Pendelkufe, und mit Radialfederschenkel incl. Gleitkufe, teilweise unter Skizzierung mitbeteiligter Peripheriebauteile, wie insbesondere Reibbelagrückenplatte, Halterung und Bremsgehäuse, in unterschiedlichen Ansichten,

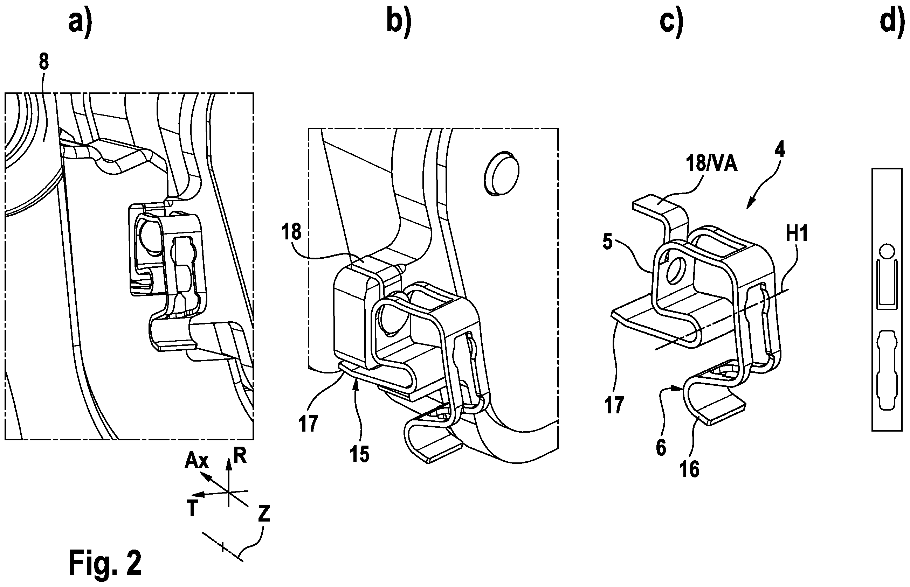

Fig. 2a-d eine zweite, im Streifenbild gerade gestaltete Ausführungsform einer Rückstellfederbaugruppe mit radial einwärts abgebogenem Axialfederschenkel vergleichbar der Fig. 1 wobei eine Verdrehsicherung jedoch durch eine gesonderte Halterauflage/Verdrehsicherungsanschlag VA realisiert ist,

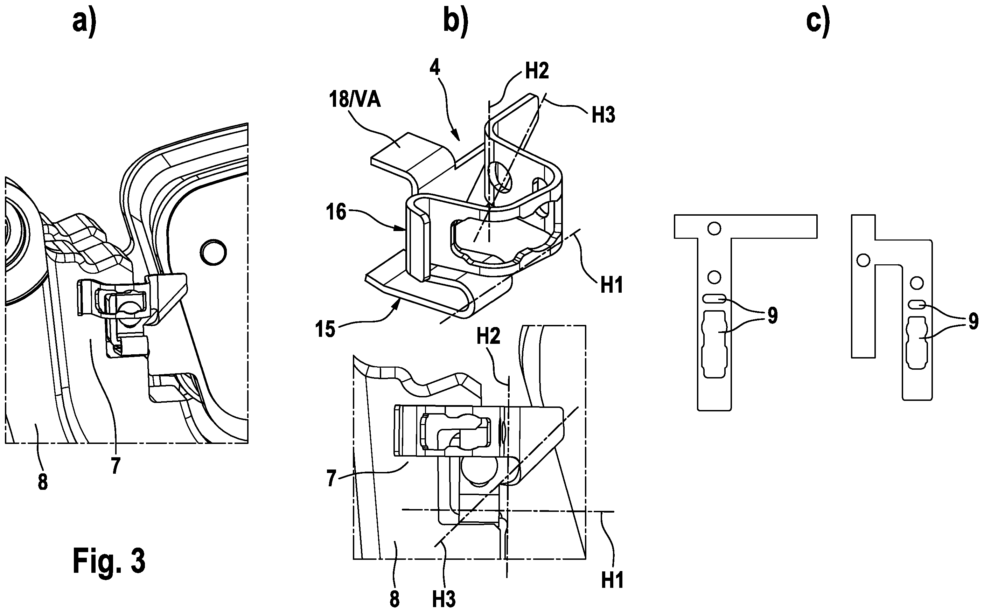

Fig. 3 a-c zwei Varianten (mit und ohne Halterauflage/Verdrehsicherungsanschlag VA) einer dritten, im Streifenbild abgebogen gestalteten Ausführungsform einer Rückstellfederbaugruppe, mit nach tangential außen abgebogenem Axialfederschenkel (bauraumsparend für elektromechanisch-kombiniert betätigbare hydraulische Kombisattelbremsen) incl. Pendelkufe, teilweise unter Skizzierung mitbeteiligter Peripheriebauteile, in unterschiedlichen Ansichten,

Fig. 4 a-c + Fig. 5 a-c eine Variante wie in Fig. 3 in ergänzenden Darstellungen,

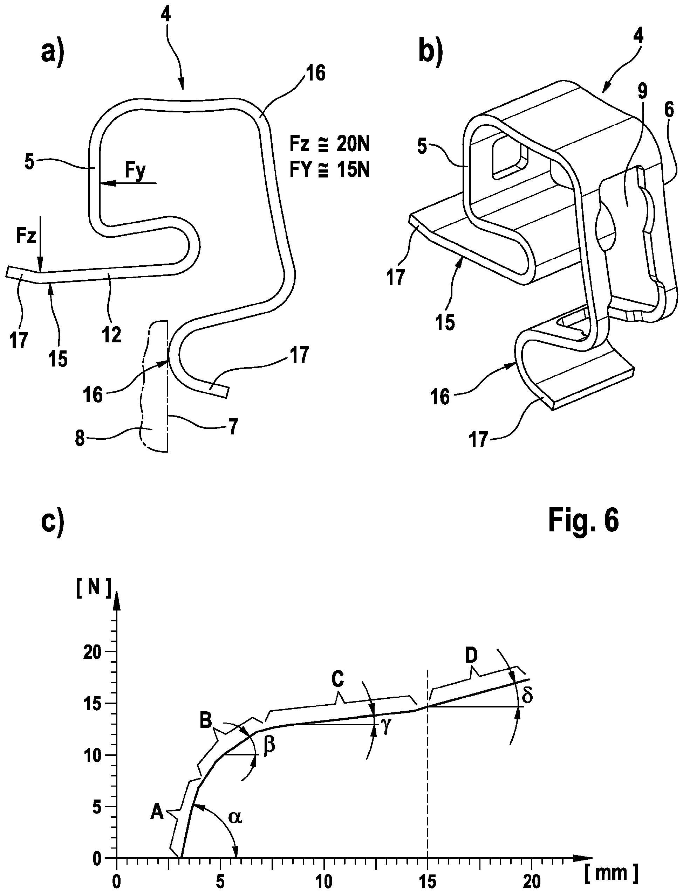

Fig. 6 a-c die Federvariante wie in Fig. 1 ergänzt um Lager- und Kraftangriffspunkte in die jeweiligen Raumachsen und zusätzlich ein schematisches Federkennliniendiagram,

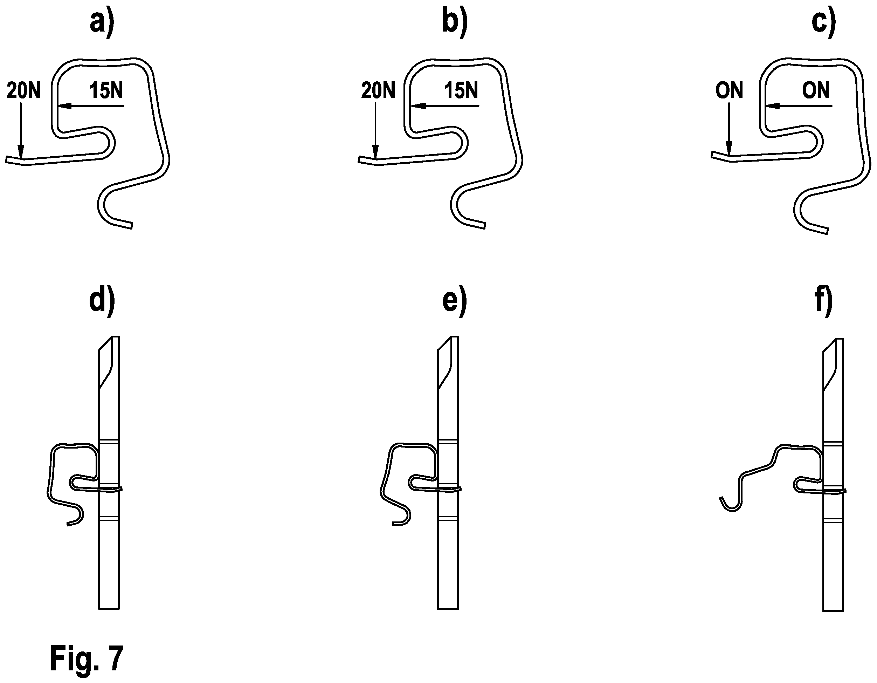

Fig. 7 a-f anhand Stadienskizzen schematisch verdeutlichte Federdeformation,

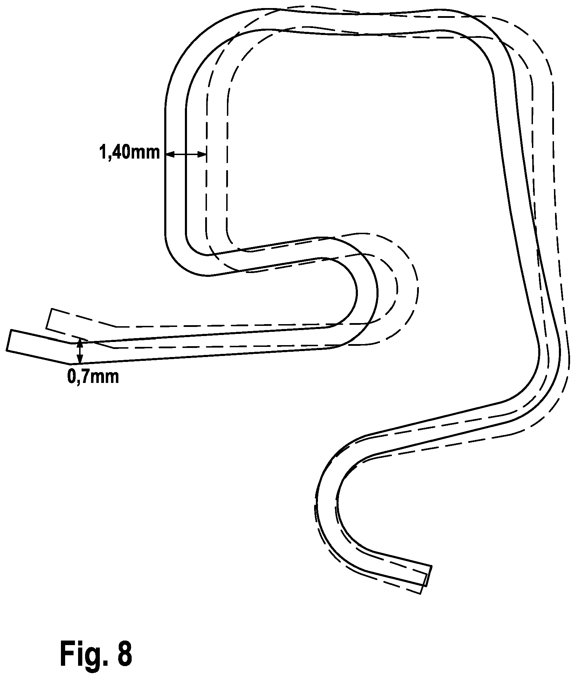

Fig. 8 Darstellung einer kraftfreien Federkontur (Fertigteil - Seitenansicht) und zum Vergleich projiziiert die elastisch vorgespannt deformierte Federkontur unmittelbar nach Bremszusammenbau,

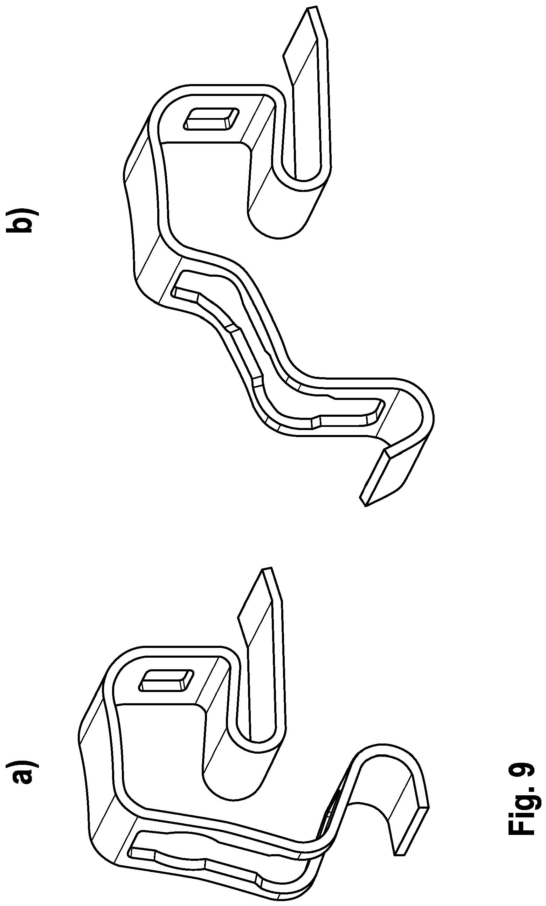

Fig. 9 a, b mit a) Verdeutlichung der nominellen Federkontur unmittelbar in Einbaulage, und b) die elastisch und plastisch deformierte Federkontur nach etwa etwa 15mm Reibbelagverschleißweg,

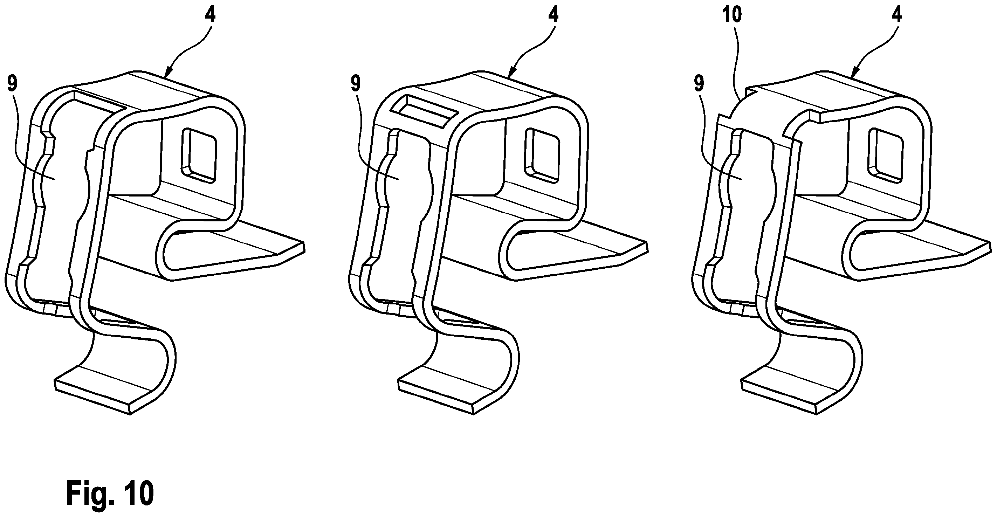

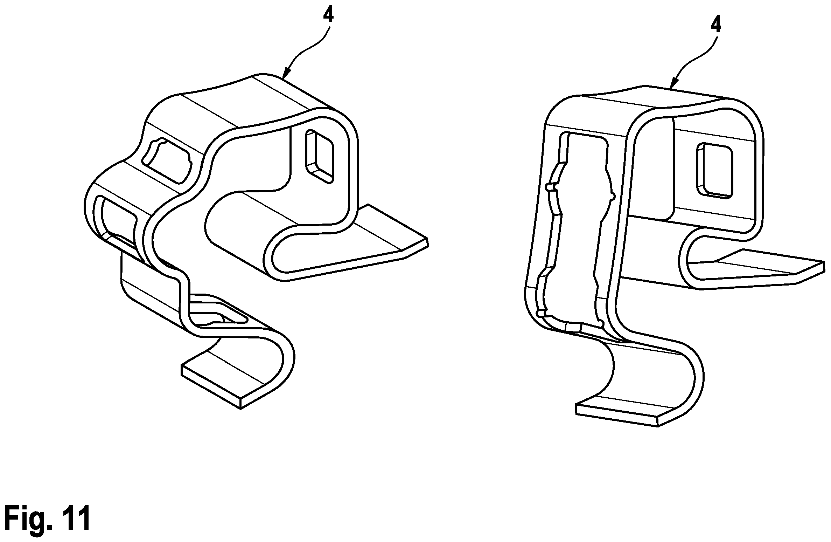

Fig. 10 + 11 verschiedene beispielhafte Abwandlungen der ersten Ausführungsform,

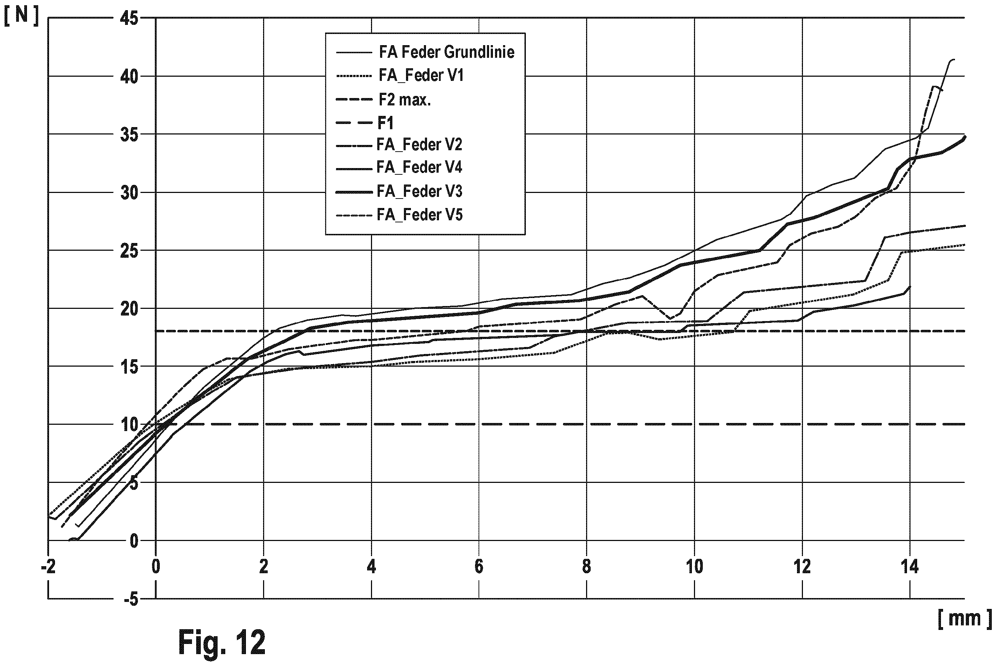

Fig. 12 Diagramm zur Verdeutlichung des Federsystemverhaltens indem eine Rückstellfederkraft F in der axial gerichteten Raumrichtung über einer Rückenplattenverschiebung in der axialen Raumrichtung abgetragen ist,

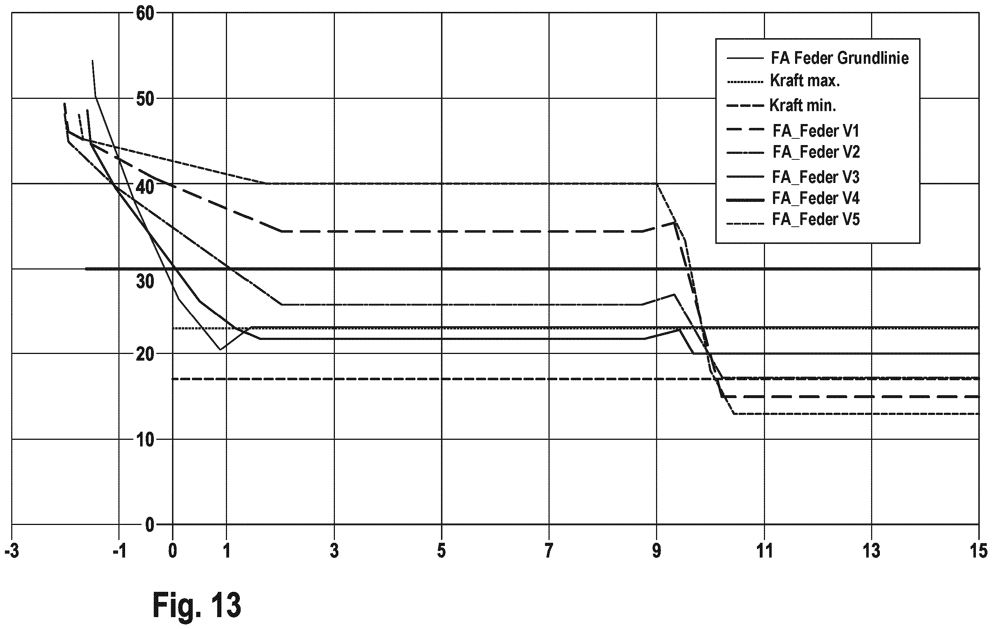

Fig. 13 ein Diagramm zur Verdeutlichung des Federsystemverhaltens ähnlich Fig. 12 wobei jedoch die Radialfederkraftkomponente dargestellt ist, und

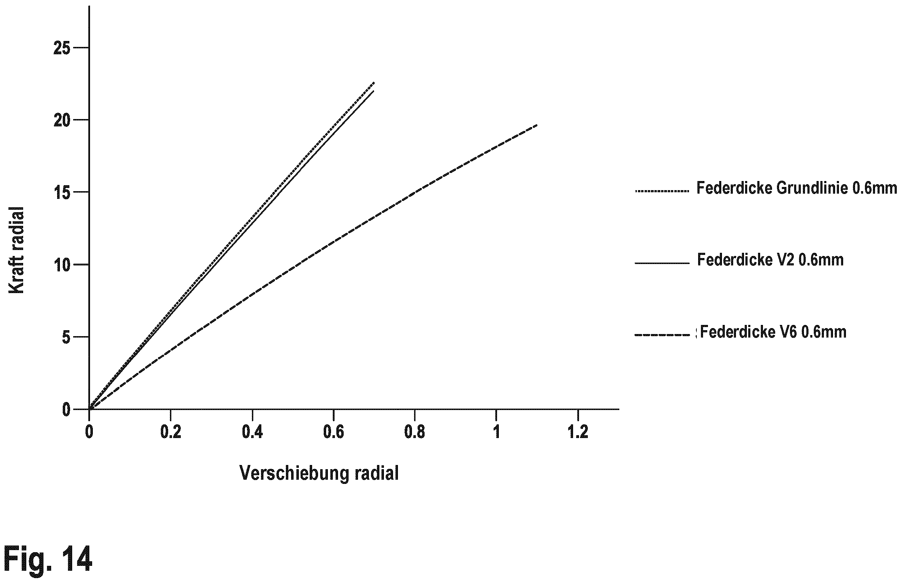

Fig. 14 Diagramm zur Verdeutlichung des Federsystemverhaltens wobei die Radialfederkraftkomponente bezogen auf eine radial gerichtete Rückenplattenverschiebung verdeutlicht ist.

Ein besonderer Vorteil der vorliegenden Erfindung besteht darin, dass eine automatische Leerwegreduktionsfunktion in Abhängigkeit von summarischer Verschleißkompensation ermöglicht ist, so dass die erfindungsgemäß weiterentwickelten Scheibenbremsen eine besonders sichere und ressourcenschonende wie effiziente Fahrzeugauslegung ermöglichen, weil eine besonders rasche Bremswirkung, unter Leerwegvermeidung und bei geringem Aufwand kostengünstig austauschbar realisierbar ist. Die Logistik bleibt einfach, weil prinzipiell kein zusätzliches Anbauteil, außer das Scheibenbremsreibbelagsystem, montiert wird. Weitere Einzelheiten der Erfindung gehen aus Unteransprüchen zusammen mit der Beschreibung anhand der Zeichnung hervor.

Es hat sich gezeigt, dass die ganz unterschiedlichen Scheibenbremskonfigurationen (Faustsattelbremsen wie auch die Festsattelbremsen) ganz unterschiedliche Rückstellfedergestaltungen erfordern können, mit der Folge, dass leider keine allgemeingültige Rückstelloptimierung ermöglicht ist. An genau dieser Stelle greift die vorliegende Erfindung ein.

Die vorliegende Erfindung erfüllt das Bedürfnis nach einer weiterentwickelten Rückstellfeder die bauraumsparende sowie vertauschungssichere Lösung zur Applikation für eine Faustsattelbremse anbietet.

Gelöst wird diese Problematik in vergleichsweise allgemeingültiger Ausgestaltung, also universell, in Verbindung mit einer besonders neuartig abschnittweise segmentiert zusammengesetzten Rückstellfeder anhand einer Rückstellfederkennlinienmodellierung mit der Maßgabe, dass eine erfindungsgemäße Rückstellfeder unter Einbezug der Gestaltänderungsenergiehypothese passgenau in den Rückstellfederkraftfluss eingefügt ist. **In** diesem Zusammenhang wird die nachgesuchte Rückstellfederkennlinie durch eine angepasste Federkennliniengestaltung, bei kaltumformtechnisch maßgeschneiderter Umformgestaltung der Rückstellfeder, sowie in Verbindung mit einer zielführenden Rückstellfederplatzierung erreicht.

Denn die vorliegende Erfindung bezieht sich in ihrer allgemeinsten Fassung auf eine optimierte Rückstellfeder, respektive einen optimierten Reibbelag beziehungsweise auf ein optimiertes Faustsattelscheibenbremssystem das das anhand der optimierten Federkennlinie eine universell adaptierbar optimierte Rückstellbefederung erlaubt, und wobei in einer bevorzugten Faustsattelinterpretation ein passend adaptierter Halterung zur drehfesten Aufnahme der passenden Reibbeläge sowie zur Lagerung von einem relativverschiebbbar gelagerten Bremsgehäuse vorliegt.

Eine erste hiermit offenbarte Interpretation I der Rückstellfedererfindung versteht sich dabei gewissermaßen als eigenständige sowie axial-relativverschiebbar gelagerte, doppelt wirksame Jochfederverkörperung, die gabelförmig ausgelegt ist, so dass deren Rückstellfederwirkung anhand von zwei Federschenkeln zwischen den zwei zueinander gegenüberliegend parallelverschiebbar gelagert arrangierten Reibbelägen derart eingespannt vorliegt, dass eine synchronisierte, bzw. differentielle Rückstellfederwirkung ermöglicht ist. Eine zweite hiermit offenbarte Interpretation II der erfindungsgemäßen Rückstellfeder ist als ein Reibbelaganbauteil rückenplattenseitig fest installiert definiert, so dass diese Rückstellfeder nicht also gesonderte Komponente vorliegt, sondern jeweils zwischen dem beschriebenen Reibbelag und dem Federauflagerpunkt, wie insbesondere einem Bremshalterauflager oder einem Bremsgehäuseauflager eingespannt vorliegt. Eine dritte offenbarte Interpretation **III** einer erfindungsgemäßen Rückstellfeder bezieht sich schließlich auf eine Gleitblech integrationen.

Dabei definiert diese neuartige Rückstellfedergestaltung zunächst eine gezielte Rückstellfederkennlinie auf der Grundlage von einem vorgegeben definierten Vorspannfederkraftniveau A, das als Eingangs- oder Primärgröße im Wesentlichen etwa am oder kurz vor einem Ende eines Hook'schen Federkennlinienbereiches gezielt platziert angeordnet ist. Dabei ist dieses vorgegeben definierte Vorspannkraftfederniveau straff und gleichzeitig limitiert derart dosiert, so dass eine Rückstellfedermontage (für Neumontage oder Reibbelagaustausch) noch ohne eine plastische Rückstellfederdeformation ermöglicht ist. Es ist in weiterer Ausgestaltung der Erfindung möglich, dass sich an das vorstehend definierte, vorgegebene, Vorspannkraftniveau als die maßgebliche Eingangsgröße unmittelbar direkt ein konstanter, im weitesten Sinne plateauförmiger, Betriebsfederkennlinienabschnitt B anschließt, der im Wesentlichen dadurch gekennzeichnet ist, dass mit zunehmender, fortgesetzter, ergo wachsender, Federdeformation (Federweg bzw. Bremsverschleiß) eine weitestgehend konstante Rückstellfederkraft vorgegeben ist, mit der Folge, dass identisches Lüftspielverhalten vorliegt. Mit anderen Worten schließt sich an das definierte Vorspannkraftniveau A ein Betriebskennlinienbereich B mit identischem bzw. weitestgehend linear-konstant definiertem Kraft-Weg-Kennlinienverhalten mit der Folge an, dass sich das Lüftspielverhalten im Wesentlichen nicht , oder zumindest nicht maßgeblich erhöht, weil jeglicher Federkraftanstieg durch eine planvoll bemessene, plastische Rückstellfederdeformation aufgezehrt wird. Es ist wichtig, dass die Länge des quasikonstant ausgelegten Betriebskennlinienbereiches B ausreichend bemessen und abgestimmt ist, so dass der Blockkennlinienbereich C mit ausreichendem Abstand zum Betriebskennlinienbereich B platziert ist. Denn mit Beginn des Blockkennlinienbereiches C geht eine vergleichsweise stark anwachsende Steigung im Kraft-Weg-Verhalten einher, was mit den Zielen der vorliegenden Erfindung nicht vereinbar ist.

Erfindungsgemäß wird der Betriebsfederkennlinienbereich B automatisch, selbsttätig, infolge fortgesetztem Bremsverschleiß aufgesucht. Demzufolge ist die Rückstellfederkraft über den gesamten Betriebskennlinienbereich B weitestehend konstant definiert. Als Folge erhält ein Fahrzeugführer/Fahrzeugbremssystem ein konstantes, verschleißunabhängig definiertes Lüftspielverhalten, weil ein konstanter Leerweg definiert ist.

Ziel ist eine besonders sichere, neuartige und wartungsfreundlich weiterentwickelte Faustsattel-Teilbelagscheibenbremse mit Rückstellvorrichtung, die jeweils im Vergleich mit dem einschlägigen Stand der Technik unter Umgehung von dessen Nachteilen vorteilhaft weiterentwickelte Eigenschaften ermöglicht. Insbesondere sollte in Abhängigkeit von etwaigem Wartungsdefizit bzw. Verschleißteilzustand gewissermaßen selbsttätig eine robuste Lösung für ein konstantes Lüftspiel bereitgestellt werden.

Die vorliegende Erfindung beinhaltet eine Rückstellvorrichtung welche wenigstens einen Federschenkel beinhaltet der einerseits mit einem Fußpunkt an einer Rückenplatte eines Reibbelages fixiert ist, welcher in einem Bremsträger axial verschiebbar geführt, sowie drehfest, aufgenommen ist, und andererseits mit einem freien Federbügelende an einer Auflage eines Bremsträgers aufsitzt, und wobei eine vorgegeben definierte Kraft-Weg-Federkennlinie der Rückstellvorrichtung über die gesamte Reibbelaglebensdauer sowohl einen weitgehend linear-elastisch-reversibel ausgelegten Federkennlinienabschnitt und zusätzlich einen weitgehend konstant-plastisch ausgelegten Federkennlinienabschnitt derart kombiniert, dass die Rückstellwirkung dieser Rückstellvorrichtung mit fortschreitendem Verschleißweg, über die gesamte Reibbelaglebensdauer, im Wesentlichen konstant vorliegt.

Die vorliegende Erfindung unterscheidet sich von sämtlichen Vorläuferkonstruktionen indem eine besonders planvolle Gestaltänderung von einem Konstruktionselement bzw. Bremsenkomponente - Reibbelagrückstellfeder - die keine übliche Bremsenverschleißkomponente im engeren Sinne darstellt - im normalen Gebrauch einkalkuliert (insbesondere erwünscht) definiert ist. **In** gänzlich diametraler Denkschule ist es demzufolge eine Wesentliche Maßnahme der vorliegenden Erfindung, dass eine irreversible plastische Deformation der Rückstellvorrichtung in einem vorgegeben beschränkten Umfang planmäßig herbeigeführt wird, um das konstante, unverändert gewünschte, Systemkennlinienverhalten über den Reibbelagverschleißweg herbeizuführen.

**In** weiterhin vorteilhafter Ausgestaltung der Erfindung sieht die Erfindung vor, dass die vorgegebene plastische Deformationkomponente im Wesentlichen abgestimmt auf das Verschleißmaß der Reibkomponenten, also kumulativ abgestimmt auf Reibbelagverschleiß und Bremsrotorverschleiß bemessen ist. Mit anderen Worten wird das fehlende Verschleißvolumen des Reibkomponenten durch die plastische Deformation der Rückstellvorrichtung stromlos automatisch kompensiert.

Weiterhin werden zusätzliche Komponenten beziehungsweise Bestandteile einer Rückstellfeder offenbart, die einen einstückig ausgestalteten Bestandteil einer umformtechnisch erhaltenen Rückstellfeder aus Stahlblechwerkstoff offenbaren, und wobei die Rückstellfeder mit einem Fuß an einer Rückseite einer Rückenplatte eines Reibbelages fixiert ist. **In** diesem Zusammenhang darf die Rückstellfederkomponente beispielweise - unabhängig voneinander oder alternativ in umfassender oder beliebiger Kombination mit - und untereinander - einen zusätzlichen Federschenkel zwecks zusätzlicher Befederung in alternative Orientierungsrichtung mit Anlage an einem Halterung oder Bremsgehäuse und/oder einen zusätzlichen Schenkel als Gleithilfe respektive weitere Befederungsmaßnahme zur An- und/oder Auflage oder Befederung in eine alternative Orientierungsrichtung an einem Halterung oder Bremsgehäuse umfassen.

Der Fuß der Rückstellfeder ist vorteilhafterweise mit der Rückseite der Rückenplatte vernietet.

Als Stahlblechhalbzeug zur Ausführung der erfindungsgemäßen Rückstellfeder bietet sich beispielhaft ein nichtrostender hochlegierter Stahlwerkstoff an, wie insbesondere beispielhaft X10CrNi18-8.

Die Zeichnung verdeutlicht verschiedenste Varianten von besonders rationell stanztechnisch bzw. per Strahl (bspw. Laser oder Wasserstrahlschneiden) individuell und dennoch einfach variierbar austrennbar gestalteten Rückstellfedern, und wobei diese meist symmetrischen Formen werkstoffsparend unmittelbar nebeneinander in einem Blechstreifenbild aneinander unmittelbar angrenzend anordbar sind. Sämtliche Rückstellfederblechstreifen werden in einer dritten räumlichen z-Dimension, die gewissermaßen mit der Blechdicke konform geht, in eine prinzipiell bügelförmige Federwicklungsform gebracht, und wobei die zueinander gekrümmt abgewinkelten Abschnitte erhalten werden.

Sämtliche Rückstellfedervarianten einer ersten Federgeneration verfügen nahezu ausnahmslos über eine weitestgehend blechstreifenförmige, gerade, schlanke also mehr lange als breite - sprich quaderförmige - Außenkontur in Form eines kompakten, dünnen Stahlblechstreifens (max. Blechdicke etwa 1,5 mm) die jeweils einen gelochten Fußabschnitt zur Nietfixierung mit passender Planauflage auf einer Rückseite einer Rückenplatte integriert. Jeder Rückstellfederrohling verfügt zusätzlich zu seiner quaderförmig geschlossen, geglätteten, kastenförmigen Außenkontur über eine oder über mehrere, fensterförmig ausgetrennt modellierte Innenausnehmungen in seinem Federbügel. Die Innenausnehmungen können miteinander verbunden sein oder alternativ sind mehrere individuelle Innenausnehmungen voneinander getrennt ausgebildet. Diese Innenausnehmungen im Federbügel dienen primär dem Zweck, in Verbindung mit einer ggf. dosiert einzubringenden Kaltverfestigung im Rahmen der Federherstellung bzw. beim Biegen/Wickeln in die benötigte Form auch noch den benötigten Betriebskennlinienabschnitt B mit dem geforderten Federkennlinienverhalten zu reproduzieren. Weil eine großzügige Bogenkrümmung nur relativ beschränkte Kaltverfestigungswirkung in einem einzigen Biegevorgang impliziert, sind zusätzliche Maßnahmen denkbar. Es ist beispielsweise zusätzlich möglich, dass ein Stahlblechhalbzeugstreifen oder beispielhaft nur ein vereinzelter, ausgetrennter Rückstellfederstreifen, beziehungsweise örtlich begrenzte Zonen des einzelnen Rückstellfederstreifenrohlings universelle und/oder örtlich begrenzte Plastifizierung in Z-Achsrichtung durch Walzplanierung/Rollierung erfahren. Dies kann dem Zweck dienen, neben einem Planier- bzw. Richteffekt für Verbesserung der Blechstreifenebenheit noch zusätzlich einen vorteilhaften Druckspannungseintrag durch Dickenreduktion/Kompression zu ermöglichen.

Diese Plastifizierung durch Walzen/Planieren/Rollieren kann in Relation zur Blechstreifenrichtung gerichtet parallel, diagonal oder quer vorgenommen werden, um eine planmäßig gerichtete Vorzugsorientierung von eingeprägten Druckeigenspannung in die Reibbelagrückstellfeder zu erzielen. Alternativ oder ergänzend dazu kann jeder Federrohling zwecks Plastifizierung kugelgestrahlt werden, was auch dessen Dauerfestigkeit signifikant erhöhen kann. Die derart profiliert sowie vorzugsweise gerichtet ausgetrennten, wunschweise plastifizierten streifenförmigen, Rückstellfederrohlinge mit ihren fensterförmig ausgetrennten Innenausnehmungen werden anschließend maschinell sortiert. Dem folgt das definierte Radienbiegen mit Biegekrümmung in die z-Richtung, eine nochmalige maschinelle Sortierung, sowie ein lagerichtiger Vernietprozess auf einer zugewiesenen Rückenplattenrückseite, bevor der gewünschte Reibbelag vervollständigt wird.

Die vorliegende Erfindung bezieht sich gleichermaßen und wechselweise unabhängig voneinander auf a) eine neuartige, plastisch deformierbar gestaltete Rückstellfeder, b) auf einen Reibbelag mit der plastisch deformierbar gestalteten Rückstellfeder, c) auf eine Kraftfahrzeugscheibenbremse die die genannten Komponenten beinhaltet, wie auch auf die d) Verwendung eines Reibbelags mit der erfindungsgemäßen, plastisch deformierbaren Rückstellfeder in einer Kraftfahrzeugscheibenbremse, und zudem e) auf ein Reibelagherstellverfahren.

### Bezugszeichenliste

1 Scheibenbremsbelag
2 Reibwerkstoff
3 Rückenplatte
4 Reibbelagrückstellfeder
5 Sockel
6 Rückstellfederbügel
7 Widerlager
8 Halterung
9 Durchgangsöffnung
10 Profilierung (randoffen)
11 Radialfederkomponente
12 Federbügel
13 Tangentialfederkomponente
14 Federbügel
15 Gleitkufe
16 Pendelkufe
17 Schaufel/Löffel
18 Verdrehsicherungsanschlag/Auflage (VA)
19 Faustsattelbremsgehäuse
20 MGU (Elektromotor-Getriebe-Einheit)
A,B,C,D Abschnitt
α,β,γ,δ Steigungswinkel
T Tangentialrichtung
R Radialrichtung
Ax Axialrichtung (parallel zu einer gedachten Raddrehachse Z)
RS Reibbelagschwerpunkt (theoret. Resultierender Reibkraftangriff)
H1 Tangentiale Biegeachse
H2 Radiale Biegeachse

## Patentansprüche

1. Kraftfahrzeugscheibenbremsbelag (1) der drehfest sowie axial verschiebbar, bezogen auf eine gedachte Raddrehachse, in einer Halterung (8) montierbar ist, umfassend Reibwerkstoff (2) der frontseitig auf einer Rückenplatte (3) fixiert ist, umfassend eine an der Rückenplatte (3) rückseitig fixierte Reibbelagrückstellfeder (4), wobei die Reibbelagrückstellfeder (4) über einen Sockel (5) und einen im Raum gekrümmt abgebogenen, angeschlossenen, die Elastizität inkorporierenden Rückstellfederbügel (6) derart verfügt, so dass der Rückstellfederbügel (6) dazu geeignet und bestimmt ist, im Bremsbetrieb auf einem Widerlager (7) der Halterung (8) elastisch vorgespannt aufzusitzen, so dass der Kraftfahrzeugscheibenbremsbelag (1) infolge Rückstellfederkraft beziehungsweise Federvorspannung grundsätzlich aus einer Bremsbetätigungsstellung axial gerichtet zurückfedert, die Reibbelagrückstellfeder (4) eine aus mehreren Abschnitten (A,B,C,D) additiv zusammengesetzte Federkennlinie umfassend mehrere quasilineare Gradenabschnitte A,C,D, und dazwischen eingefügt mindestens ein gekrümmter Übergangsabschnitt B, jeweils enthaltend zueinander unterschiedlich definierte Steigungswinkel α,β,γ,δ, und wobei unter den Abschnitten zumindest ein, zumindest teilweise plastisch deformierbar ausgelegter Teil bzw. Abschnitt B,C,D vorliegt, welcher durch sein vorgegebenes, definiertes, plastisches Verformungsverhalten dazu dient, automatisch bedarfsgerechte Rückfederung anhand Verschleißkompensation (Reibbelag + Bremsscheibe) zu ermöglichen,
**dadurch gekennzeichnet, dass**
der Rückstellfederbügel (6) der Reibbelagrückstellfeder (4) mit Bezug auf eine Radialrichtung R bei tangential erstreckter Biegeachse H1 nach radial innen weisend derart bügelförmig umgebogen ist, so dass das Widerlager (7) des Rückstellfederbügels (6) radial unterhalb in Bezug auf den Sockel (5) zugeordnet ist.

2. Kraftfahrzeugscheibenbremsbelag (1) nach Anspruch 1, **dadurch gekennzeichnet, dass** die Reibbelagrückstellfeder (4) zumindest bereichsweise G-bogenförmig geschweift ausgeführt ist.

3. Kraftfahrzeugscheibenbremsbelag (1) nach einem oder mehreren der Ansprüche 1 - 2, **dadurch gekennzeichnet, dass** der Rückstellfederbügel (6) der Reibbelagrückstellfeder (4) mit Bezug auf eine Tangentialrichtung T bei radial erstreckter Biegeachse H2 nach tangential außen weisend derart bügelförmig umgebogen ist, so dass das Widerlager (7) nach tangential außen versetzt sowie weitgehend auf radialer Höhe eines Reibbelagmittelpunktes versetzt definiert vorgesehen ist.

4. Kraftfahrzeugscheibenbremsbelag (1) nach einem oder mehreren der Ansprüche 1 - 3, **dadurch gekennzeichnet, dass** die Reibbelagrückstellfeder (4) eine einfache oder mehrfache S-förmige und/oder schneckenförmig gewundene Federbügelkrümmung definiert.

5. Kraftfahrzeugscheibenbremsbelag (1) nach einem oder mehreren der vorhergehenden Ansprüche 1- 4, **dadurch gekennzeichnet, dass** die Reibbelagrückstellfeder (4) aus Flachstahlwerkstoff ausgetrennt ist, und wobei diese zwecks Federkennlinienmodifikation abschnittsweise als Rahmen mit wenigstens einer Durchgangsöffnung (9) und/oder mit wenigstens einer randoffenen Profilierung (10) versehen ist.

6. Kraftfahrzeugscheibenbremsbelag (1) nach einem oder mehreren der vorhergehenden Ansprüche 1- 5, **dadurch gekennzeichnet, dass** die Reibbelagrückstellfeder (4) als multifunktionale Rückstellfederbaugruppe ausgebildet ist, indem der Sockel (5) ein Mittelzentrum definiert, und wobei ein radial abgewinkelt gerichtetes Endstück der Reibbelagrückstellfeder (4) den Rückstellfederbügel (6) definiert, und wobei ein diametral dazu gegenüber erstrecktes Endstück der Reibbelagrückstellfeder (4) eine einstückig integrierte Radialfederkomponente (11) und/oder eine einstückig integrierte Tangentialfederkomponente (13) mit mindestens einem und/oder mehreren zusätzlichen Federbügeln (12,14) definiert.

7. Kraftfahrzeugscheibenbremsbelag (1) nach einem oder mehreren der vorhergehenden Ansprüche 1 - 6, **dadurch gekennzeichnet, dass** im Kraftfluss zwischen Kraftfahrzeugscheibenbremsbelag (1) und Halterung (8) mittels der Reibbelagrückstellfeder (4) eine Radialkraftfederkomponente (11) und/oder Tangentialkraftfederkomponente (13) integriert ist.

8. Kraftfahrzeugscheibenbremsbelag (1) nach einem oder mehreren der vorhergehenden Ansprüche 1 - 7, **dadurch gekennzeichnet, dass** die Reibbelagrückstellfeder (4) über mindestens eine Kufe mit einer Ausprägung als Gleitkufe (15) und/oder Pendelkufe (16) verfügt.

9. Kraftfahrzeugscheibenbremsbelag (1) nach Anspruch 8, **dadurch gekennzeichnet, dass** die Kufe an Ihrem Endstück über eine abgewinkelte Schaufel oder über einen gebogenen Löffel (17) und/oder über eine Kombination derselben verfügt.

10. Kraftfahrzeugscheibenbremsbelag (1) nach Anspruch 6 oder nach einem oder mehreren der Ansprüche 7 - 9 in Kombination mit Anspruch 6, **dadurch gekennzeichnet, dass** die zusätzliche Federkomponente (11,13) mit der multifunktionalen Rückstellfederbaugruppe einstückig kombiniert vorliegt, indem jede Federkomponente (11,13) als gesonderter Federbügel von der multifunktionalen Rückstellfederbaugruppe abgezweigt ist.

11. Kraftfahrzeugscheibenbremsbelag (1) nach Anspruch 6 oder nach einem oder mehreren der Ansprüche 7 - 10 in Kombination mit Anspruch 6, **dadurch gekennzeichnet, dass** Federkomponente (11,13) und Rückstellfederbügel (6) mit Bezug auf ein Rohteilstreifenbild orthogonal zueinander versetzt abgebogen vorgesehen sind.

12. Kraftfahrzeugscheibenbremsbelag (1) nach Anspruch 6 oder nach einem oder mehreren der Ansprüche 7 - 11 in Kombination mit Anspruch 6, **dadurch gekennzeichnet, dass** die Federkomponente (11,13) von dem Sockel (5) und/oder von dem Rückstellfederbügel (6) der multifunktionalen Rückstellfederbaugruppe abgezweigt ist.

13. Kraftfahrzeugscheibenbremsbelag (1) nach Anspruch 6 oder nach einem oder mehreren der Ansprüche 7 - 12 in Kombination mit Anspruch 6, **dadurch gekennzeichnet, dass** zur Kupplung bzw. Auflage zwischen multifunktionaler Rückstellfederbaugruppe und Halterung (8) zumindest eine dynamisch bewegbare Federauflage definiert ist.

14. Kraftfahrzeugscheibenbremsbelag (1) nach Anspruch 6 oder nach einem oder mehreren der Ansprüche 7 - 13 in Kombination mit Anspruch 6, **dadurch gekennzeichnet, dass** die multifunktionale Rückstellfederbaugruppe in projiziertem Schattenwurf über eine weitgehend G-förmige, also schneckenartig gekrümmt gebogen ausgeführte, Silhouette verfügt, sowie umfassend zwei Federkomponenten (11,13) einschließlich Kufen mit orthogonal zueinander gerichteter Kraftwirkung in die Radialkraftrichtung und in die Axialkraftrichtung.

15. Kraftfahrzeugscheibenbremsbelag (1) nach Anspruch 6 oder nach einem oder mehreren der Ansprüche 7 - 14 in Kombination mit Anspruch 6, **dadurch gekennzeichnet, dass** die multifunktionale Rückstellfederbaugruppe als Multifunktionsfederbauteil in einem Streifenbild im Wesentlichen T-förmig abgewinkelt ist, und dazu zusätzlich einen abgewinkelten Verdrehsicherungsanschlagschenkel/ Halterauflage VA (18) definiert.

## Claims

1. Motor-vehicle disc-brake lining (1) which is mountable in a holder (8) in a rotationally fixed and axially displaceable manner in relation to an imaginary wheel axis of rotation, comprising friction material (2) which is fixed on the front side of a back plate (3), comprising a friction-lining restoring spring (4) which is fixed on the rear side of the back plate (3), wherein the friction-lining restoring spring (4) has a base (5) and a connected restoring-spring bow (6), which is bent into a spatial curve and incorporates elasticity, such that the restoring spring bow (6) is suitable and intended for being seated elastically prestressed on a counter-bearing (7) of the holder (8) during braking operation such that the motor-vehicle disc-brake lining (1), as a result of restoring-spring force or spring prestress, in principle springs back in an axial direction from a brake actuation position, the friction-lining restoring spring (4) has a spring characteristic curve additively made up of multiple portions (A, B, C, D) that comprises multiple quasi-linear straight portions A, C, D and, incorporated in-between, at least one curved transition portion B, in each case comprising mutually differently defined gradient angles α,β,γ,δ, and wherein, among the portions, there is at least one part or portion B, C, D which is configured for at least partial plastic deformability and which, due to its predetermined and defined plastic deformation behaviour, serves to automatically allow demand-oriented spring-back on the basis of wear compensation (friction lining + brake disc), **characterized in that** the restoring-spring bow (6) of the friction-lining restoring spring (4), directed radially inwards with respect to a radial direction R with tangentially extending bending axis H1, is bent in a bow-shaped manner in such a way that the counter-bearing (7) is assigned to the restoring-spring bow (6) so as to be radially lower than the base (5).

2. Motor-vehicle disc-brake lining (1) according to Claim 1, **characterized in that** the friction-lining restoring spring (4) is designed to be at least regionally swept in a G-shaped curve.

3. Motor-vehicle disc-brake lining (1) according to either or both of Claims 1 and 2, **characterized in that** the restoring-spring bow (6) of the friction-lining restoring spring (4), directed tangentially outwards with respect to a tangential direction T with radially extending bending axis H2, is bent in a bow-shaped manner in such a way that the counter-bearing (7) is provided so as to be defined offset tangentially outwards and offset largely at the radial height of a friction-lining centre point.

4. Motor-vehicle disc-brake lining (1) according to one or more of Claims 1-3, **characterized in that** the friction-lining restoring spring (4) defines a single or multiple S-shaped and/or helically winding spring-bow curvature.

5. Motor-vehicle disc-brake lining (1) according to one or more of preceding Claims 1-4, **characterized in that** the friction-lining restoring spring (4) is cut from flat-steel material, and wherein, for the purpose of spring-characteristic-curve modification, said friction-lining restoring spring is sectionally provided as a frame with at least one passage opening (9) and/or with at least one profiling (10) that is open to the edge.

6. Motor-vehicle disc-brake lining (1) according to one or more of preceding Claims 1-5, **characterized in that** the friction-lining restoring spring (4) is formed as a multi-functional restoring-spring assembly **in that** the base (5) defines a centre, and wherein an end piece, directed radially at an angle, of the friction-lining restoring spring (4) defines the restoring-spring bow (6), and wherein a diametrically oppositely extending end piece of the friction-lining restoring spring (4) defines a radial spring component (11) integrated in one piece and/or a tangential spring component (13) integrated in one piece with at least one and/or multiple additional spring bows (12, 14).

7. Motor-vehicle disc-brake lining (1) according to one or more of preceding Claims 1-6, **characterized in that** a radial-force spring component (11) and/or a tangential-force spring component (13) are/is integrated in the force flow between the motor-vehicle disc-brake lining (1) and the holder (8) by means of the friction-lining restoring spring (4).

8. Motor-vehicle disc-brake lining (1) according to one or more of preceding Claims 1-7, **characterized in that** the friction-lining restoring spring (4) has at least one shoe designed as a sliding shoe (15) and/or floating shoe (16).

9. Motor-vehicle disc-brake lining (1) according to Claim 8, **characterized in that**, at its end piece, the shoe has an angled vane or a curved scoop (17) and/or a combination thereof.

10. Motor-vehicle disc-brake lining (1) according to Claim 6 or according to one of more of Claims 7-9 in combination with Claim 6, **characterized in that** the additional spring component (11, 13) is provided combined in one piece with the multi-functional restoring-spring assembly **in that** each spring component (11, 13) branches off from the multi-functional restoring-spring assembly as a separate spring bow.

11. Motor-vehicle disc-brake lining (1) according to Claim 6 or according to one of more of Claims 7-10 in combination with Claim 6, **characterized in that** the spring component (11, 13) and the restoring-spring bow (6) are provided so as to be bent in a manner orthogonally offset with respect to one another in relation to a blank strip image.

12. Motor-vehicle disc-brake lining (1) according to Claim 6 or according to one of more of Claims 7-11 in combination with Claim 6, **characterized in that** the spring component (11, 13) branches off from the base (5) and/or from the restoring-spring bow (6) of the multi-functional restoring-spring assembly.

13. Motor-vehicle disc-brake lining (1) according to Claim 6 or according to one of more of Claims 7-12 in combination with Claim 6, **characterized in that** at least one dynamically movable spring support is defined for coupling or support between the multi-functional restoring-spring assembly and the holder (8).

14. Motor-vehicle disc-brake lining (1) according to Claim 6 or according to one of more of Claims 7-13 in combination with Claim 6, **characterized in that** the multi-functional restoring-spring assembly, in a projected shadow casting, has a silhouette that is largely G-shaped, that is to say bent in the manner of a helical curve, and comprising two spring components (11, 13), including shoes, with mutually orthogonally directed force action in the radial force direction and in the axial force direction.

15. Motor-vehicle disc-brake lining (1) according to Claim 6 or according to one of more of Claims 7-14 in combination with Claim 6, **characterized in that** the multi-functional restoring-spring assembly, as a multi-functional spring component, is angled in a substantially T-shaped manner in a strip image and, in this respect, additionally defines an angled rotation-prevention stop leg/holder support VA (18).

## Revendications

1. Garniture de frein à disque de véhicule automobile (1) qui peut être montée dans un support (8) de manière solidaire en rotation et axialement mobile, par rapport à un axe de rotation de roue imaginaire, comprenant une matière de friction (2) qui est fixée sur la face frontale sur une plaque arrière (3), comprenant un ressort de rappel de garniture de friction (4) fixé à la plaque arrière (3), dans laquelle le ressort de rappel de garniture de friction (4) dispose d'un socle (5) et d'un étrier de ressort de rappel (6) cintré de manière courbée dans l'espace, raccordé, incorporant l'élasticité, de telle sorte que l'étrier de ressort de rappel (6) est adapté et déterminé pour reposer à précontrainte élastique sur une culée (7) du support (8) en mode freinage, de sorte que la garniture de frein à disque de véhicule automobile (1) est rappelée en principe de manière axialement directionnelle en raison de la force de ressort de rappel ou de la précontrainte de ressort d'une position d'actionnement de frein, le ressort de rappel de garniture de friction (4) présentant une courbe caractéristique de ressort composée de manière additive de plusieurs segments (A, B, C, D) qui comprend plusieurs segments de droite A, C, D quasi linéaires, et un segment de transition B inséré entre ceux-ci, respectivement comportant des angles de pente α, β, γ, δ définis différents les uns des autres, et dans laquelle, parmi les segments, il existe au moins une partie ou un segment B, C, D conçu(e) de manière au moins partiellement à déformation plastique, qui sert par son comportement de déformation plastique défini, prédéfini, à permettre automatiquement un retour élastique approprié à l'aide d'une compensation d'usure (garniture de friction + disque de frein), **caractérisée en ce que** l'étrier de ressort de rappel (6) du ressort de rappel de garniture de friction (4) est plié en forme d'étrier par rapport à une direction radiale R avec un axe de flexion H1 s'étendant tangentiellement en étant tourné radialement vers l'intérieur de telle sorte que la culée (7) de l'étrier de ressort de rappel (6) est associée radialement en-dessous par rapport au socle (5).

2. Garniture de frein à disque de véhicule automobile (1) selon la revendication 1, **caractérisée en ce que** le ressort de rappel de garniture de friction (4) est réalisé au moins par endroits de manière arquée en forme d'arc de G.

3. Garniture de frein à disque de véhicule automobile (1) selon une ou plusieurs des revendications 1 à 2, **caractérisée en ce que** l'étrier de ressort de rappel (6) du ressort de rappel de garniture de friction (4) est plié en forme d'étrier par rapport à une direction tangentielle T avec un axe de flexion H2 s'étendant radialement en étant tourné tangentiellement vers l'extérieur de telle sorte que la culée (7) est prévue de manière tangentiellement décalée vers l'extérieur et en étant définie comme décalée largement à la hauteur radiale d'un point central de garniture de friction.

4. Garniture de frein à disque de véhicule automobile (1) selon une ou plusieurs des revendications 1 à 3, **caractérisée en ce que** le ressort de rappel de garniture de friction (4) définit une courbure d'étrier de ressort simple ou multiple en forme de S et/ou tournée de manière hélicoïdale.

5. Garniture de frein à disque de véhicule automobile (1) selon une ou plusieurs des revendications précédentes 1 à 4, **caractérisée en ce que** le ressort de rappel de garniture de friction (4) est découpé dans une matière d'acier plat, et dans laquelle, en vue d'une modification de la courbe caractéristique de ressort, celle-ci est pourvue par endroits en tant que cadre d'au moins une ouverture de passage (9) et/ou d'au moins un profilage (10) à bord ouvert.

6. Garniture de frein à disque de véhicule automobile (1) selon une ou plusieurs des revendications précédentes 1 à 5, **caractérisée en ce que** le ressort de rappel de garniture de friction (4) est réalisé sous forme de sous-ensemble de ressort de rappel, **en ce que** le socle (5) définit un centre, et dans laquelle une pièce d'extrémité du ressort de rappel de garniture de friction (4), dirigée de manière radialement coudée, définit l'étrier de ressort de rappel (6), et dans laquelle une pièce d'extrémité du ressort de rappel de garniture de friction (4), s'étendant de manière diamétralement opposée à celui-ci, définit un composant de ressort radial (11) intégré d'un seul tenant et/ou un composant de ressort tangentiel (13) intégré d'un seul tenant avec au moins un et/ou plusieurs étriers de ressort (12, 14) supplémentaires.

7. Garniture de frein à disque de véhicule automobile (1) selon une ou plusieurs des revendications précédentes 1 à 6, **caractérisée en ce que** dans le flux de force entre la garniture de frein à disque de véhicule automobile (1) et le support (8), un composant de ressort à force radiale (11) et/ou un composant de ressort à force tangentielle (13) sont intégrés au moyen du ressort de rappel de garniture de friction (4).

8. Garniture de frein à disque de véhicule automobile (1) selon une ou plusieurs des revendications précédentes 1 à 7, **caractérisée en ce que** le ressort de rappel de garniture de friction (4) dispose d'au moins un patin dans une version de patin de glissement (15) et/ou de patin oscillant (16).

9. Garniture de frein à disque de véhicule automobile (1) selon la revendication 8, **caractérisée en ce que** le patin dispose au niveau de sa pièce d'extrémité d'une pelle coudée ou d'un godet courbe (17) et/ou d'une combinaison de ceux-ci.

10. Garniture de frein à disque de véhicule automobile (1) selon la revendication 6 ou selon une ou plusieurs des revendications 7 à 9 en combinaison avec la revendication 6, **caractérisée en ce que** le composant de ressort supplémentaire (11, 13) est présent de manière combinée d'un seul tenant avec le sous-ensemble de ressort de rappel multifonction, **en ce que** chaque composant de ressort (11, 13) bifurque du sous-ensemble de ressort de rappel multifonction sous la forme d'un étrier de ressort séparé.

11. Garniture de frein à disque de véhicule automobile (1) selon la revendication 6 ou selon une ou plusieurs des revendications 7 à 10 en combinaison avec la revendication 6, **caractérisée en ce que** le composant de ressort (11, 13) et l'étrier de ressort de rappel (6) sont prévus de manière pliée en étant décalés orthogonalement l'un par rapport à l'autre par rapport à un dessin de découpage d'ébauche.

12. Garniture de frein à disque de véhicule automobile (1) selon la revendication 6 ou l'une ou plusieurs des revendications 7 à 11 en combinaison avec la revendication 6, **caractérisée en ce que** le composant de ressort (11, 13) bifurque du socle (5) et/ou de l'étrier de ressort de rappel (6) du sous-ensemble de ressort de rappel multifonction.

13. Garniture de frein à disque de véhicule automobile (1) selon la revendication 6 ou l'une ou plusieurs des revendications 7 à 12 en combinaison avec la revendication 6, **caractérisée en ce qu'**au moins un appui de ressort dynamiquement mobile est défini pour l'accouplement ou l'appui entre le sous-ensemble de ressort de rappel multifonction et le support (8).

14. Garniture de frein à disque de véhicule automobile (1) selon la revendication 6 ou l'une ou plusieurs des revendications 7 à 13 en combinaison avec la revendication 6, **caractérisée en ce que** le sous-ensemble de ressort de rappel multifonction dans une ombre portée projetée dispose d'une silhouette largement en forme de G, donc courbée de manière hélicoïdale, et comprend deux composants de ressort (11, 13) avec des patins à effet de force dirigé orthogonalement l'un par rapport à l'autre dans la direction de force radiale et dans la direction de force axiale.

15. Garniture de frein à disque de véhicule automobile (1) selon la revendication 6 ou l'une ou plusieurs des revendications 7 à 14 en combinaison avec la revendication 6, **caractérisée en ce que** le sous-ensemble de ressort de rappel multifonction est coudé sous la forme d'un composant de ressort multifonction dans un dessin de découpage substantiellement en forme de T et définit à cet effet de plus une branche de butée anti-torsion/ un appui de support VA (18).
